# EUROPÄISCHE PATENTSCHRIFT

(11) **EP 1 859 708 B1**
(45) Veröffentlichungstag und Bekanntmachung des Hinweises auf die Patenterteilung: **30.05.2012**
(21) Anmeldenummer: 07010018.5
(22) Anmeldetag: 20.05.2007
(51) Int. Cl.: A47C 23/06

(54) **Federstrebe und Matratzenträger, Matratze und Posterelement mit derartigen Federstreben**
Spring support and mattress support, mattress and poster element with such spring supports
Croisillon à ressort et support de matelas, matelas et élément de poster doté d'un tel croisillon à ressort

(30) Priorität: 25.05.2006 DE 202006008489 U
(43) Veröffentlichungstag der Anmeldung: 28.11.2007
(73) Patentinhaber: Rummel-Matratzen GmbH & Co. KG, 91413 Neustadt a.d. Aisch (DE)
(72) Erfinder: Richter, Dietrich, 91413 Neustadt a.d. Aisch (DE)
(74) Vertreter: Mielke, Klaus

(56) Entgegenhaltungen:
- EP-A- 0 858 754
- DE-A1- 2 344 770
- DE-A1- 4 234 242
- DE-A1- 19 740 203
- DE-C1- 3 434 641

## Beschreibung

Die Erfindung betrifft eine Federstrebe, welche vorteilhaft z.B. beim Bau von Betten und Postermöbeln verwendet werden kann. Die Erfindung betrifft weiterhin einen Matratzenträger, eine Matratze und ein Polsterelement, welche derartige Federstreben aufweisen.

Besonders beim Aufbau von Sitz- und Liegemöbeln für Personen werden häufig Elemente benötigt, welche einerseits eine trägerartige Struktur aufweisen und z.B. zum Bau von Rahmenteilen bzw. flächigen Versteifungselementen eingesetzt werden können. Andererseits sollen diese Elemente aber auch gegenüber Kräften, die vorzugsweise aus einer bestimmten Raumrichtung darauf einwirken, gewisse Federeigenschaften aufweisen, insbesondere gegenüber vertikalen Druckkräften.

So sind z.B. im Inneren von Polstermöbeln häufig Rahmen eingebaut, welche sowohl zur Unterstützung von darauf ruhenden Sitz-, Liege- und Rückenflächen als auch zur seitlichen Versteifung des Möbelstücks dienen. Diese Rahmen dienen somit einerseits als Träger von Polsterelementen, weisen aber andererseits selbst gewisse federnde Eigenschaften gegenüber Druckkräften auf. Diese können durch das Gewicht von Personen hervorgerufen und über Polster oder Matratzen auf diese übertragen werden.

In einer vergleichbaren Weise haben z.B. Matratzenträger, welche gelegentlich auch als Matratzen- oder Lattenroste bezeichnet werden, einerseits die Aufgabe als Grundrahmen und somit als ein wesentliches, tragendes Teil in einem Bett zu dienen. Darüber hinaus sollen diese aber auch über gewisse eigenständige elastische Eigenschaften verfügen und die Federwirkung einer darauf liegenden Matratze unterstützen und gegebenenfalls ergänzen.

Aus der EP 0 858 754 A2 ist ein Bettrahmen mit drehbaren Sprossen bekannt. Jede Sprosse weist einen stabförmigen Kern auf, dessen Enden in gegenüber liegenden Öffnungen der längs verlaufenden Seiten des Bettrahmens drehbar gelagert sind. Auf den Außenseiten des Bettrahmens sind an den Enden des Kerns Griffe angebracht, um jede Sprosse in eine gewünschte Drehlage zu bringen und zu halten. Der stabförmige Kern einer Sprosse ist um ein federelastisches Flügelelement erweitert Dieses erstreckt sich entlang des Kerns und weist radial zum Kern einen halbbogenförmigen, sich von Ansatzpunkt am Kern bis zur äußersten Spitze des Halbbogens verjüngenden Querschnitt auf. Je nach Drehlage einer Sprosse werden Kräfte, z.B. durch eine auf dem Bett ruhende Person, entweder in einen unmittelbar am Kern befindlichen dicken Querschnittsbereich am Fuße des Halbbogens, bzw. in einen vom Kern weiter entfernten weniger dicken Querxhnittsbereich im Rücken des Halbbogens oder in einen vom Kern am weitesten entfernten dünnen Querschnittsbereich an der Spitze des Halbbogens eingeleitet. Da die dicken, weniger dicken bzw. dünnen Querschnittsbereiche eine geringe, mittlere bzw. hohe Elastizität aufweisen, kann die Federwirkung einer jeden Sprosse durch Drehung eingestellt werden.

Rahmen, welche eine Federwirkung in einer Raumrichtung aufweisen, in der Regel in vertikaler Richtung, sind vielfältig bekannt. Matratzenträger können hierzu einen hochkomplexen Aufbau aufweisen. Dabei werden standardmäßig als eine Art Grundbauteil geringfügig nach außen gewölbte, also konvex gekrümmte Latten verwendet, welche parallel nebeneinander liegend in einem Rahmen gelagert sind. Als beidseitige Lager für diese Latten in dem Rahmen können komplexe Gummilager dienen. Bei einer Belastung der Latten durch eine von oben einwirkende Druckkraft lassen diese die dabei auftretende, durch die Verringerung von deren konvexer Krümmung hervorgerufene, beidseitige Längenausdehnung der Latten zu. Weiterhin sind in der Regel diverse zusätzliche Elemente vorhanden, wie z.B. Längsgurte zwischen den Latten, aufliegende Konterlatten und vieles mehr. Andererseits sollte aber ein Matratzenträger trotz dieses filigranen Aufbaus dennoch robust genug sein, um auch groben, u.U. unsachgemäßen Belastungen standzuhalten. Diese können z.B. dann auftreten, wenn ein Matratzenträger sehr stark punktuell belastet wird, da z.B. eine Person sich nicht nur auf die Matratze legt, sondern mit den Füßen auf diese steigt.

Der Erfindung liegt die Aufgabe zu Grunde, ein Grundbauteil zu schaffen, welches besonders zum Aufbau von Polstermöbeln, Matratzenträgern, Matratzen und dergleichen geeignet ist, und das die in gewisser Weise gegenläufigen Forderungen von guten Federeigenschaften vorzugsweise In einer Raumrichtung bei dennoch großer Gesamtstabilität auf eine besonders vorteilhafte Weise vereint.

Die Aufgabe der Erfindung wird mit den Merkmalen der im Anspruch 1 angegebenen Federstrebe gelöst. Weitere vorteilhafte Ausführungen der Erfindung sind In den Unteransprüchen angegeben. In den Unteransprüchen sind weiterhin ein vorteilhafter Matratzenträger, eine Matratze und ein Polsterelement angegeben, welche Federstreben gemäß der Erfindung aufweisen.

Die erfindungsgemäße Federstrebe enthält eine Stützstrebe und zumindest ein längs mit der Stützstrebe verbundenes Spiralfederelement.

Eine Federstrebe gemäß der Erfindung stellt ein besonders zum Aufbau z.B. von Matratzenträgern und Polstermöbeln geeignetes Grundbauteil dar. Die erfindungsgemäße Verbindung der Stützstrebe mit dem Spiralfederelement in Längsrichtung, also parallel zur zentralen Achse des Spiralfederelements, bietet eine Vielzahl von Vorteilen. Ein wesentlicher Vorteil wird darin gesehen, dass bei der erfindungsgemäßen Federstrebe die Funktionen von Halterung und Federung weitgehend voneinander entkoppelt sind.

So können die tragenden Stützstreben bei den erfindungsgemäßen Federstreben so robust ausgeführt werden, dass diese nicht nur zur Halterung von damit in Längsrichtung verbundenen Spiralfederelementen dienen. Vielmehr können Sie als tragende Konstruktionselemente z.B. bei einem Matratzenträger fest in einem Rahmen montiert sein, und damit wesentlich zu dessen Verwindungssteifigkeit und Belastbarkeit beitragen. Da somit die Federwirkung der erfindungsgemäßen Federstrebe weitgehend von den damit verbundenen Spiralfederelementen bereitgestellt werden kann, müssen die Stützstreben an sich keine eigenständigen Biegeeigenschaften aufweisen. Falls allerdings bei besonderen Anwendungen eine gewisse Eigenbiegbarkeit der Stützstrebe gewünscht sein sollte, so kann diese bei einer anwendungsspezifischen Auslegung der erfindungsgemäßen Federstrebe ohne weiteres auch vorgesehen werden.

Vorteilhaft wird somit bei einer gemäß der Erfindung aufgebauten Federstrebe die Federwirkung weitgehend von einem Spiralfederelement bereitgestellt. Bei einem Einsatz solcher Federstreben z.B. zum Aufbau eines Matratzenträgers sind die Spiralfederelemente normalerweise längs angeordnet und nehmen eine annähernd horizontale Lage ein. Von oben auf den Matratzenträger in vertikaler Richtung einwirkende Druckkräfte werden somit von den quasi liegenden Spiralfederelementen aufgenommen. Dabei ist von besonderem Vorteil, dass punktuell einwirkende Druckkräfte von einzelnen Windungen der betroffenen, liegenden Spiralfedern aufgenommen werden und keine Weiterleitung von Kräften auf benachbarte Windungen zu befürchten sind. Weiterhin ist jede einzelne Windung über die Längsverbindung mit der Stützstrebe gegen Beschädigungen geschützt.

Vorteilhaft kann die Federstrebe gemäß der Erfindung so ausgeführt sein, dass das mindestens eine Spiralfederelement längs so mit der Stützstrebe verbunden ist, dass die Stützstrebe außerhalb des Querschnitts des Spiralfederelements verläuft. Bevorzugt ist dabei das Spiralfederelement über die Außenseiten von deren Windungen mit der Mantelfläche der Stützstrebe verbunden, z.B. verklebt oder geklammert. Ist gemäß einer weiteren, vorteilhaften Ausführung die Stützstrebe z.B. lattenförmig und weist darüber hinaus gegebenenfalls einen rechteckförmigen Querschnitt auf, so kann in diesen Fällen das Spiralfederelemente der Federstrebe auf den Außenseiten der Stützstrebe aufliegen, insbesondere auf einer Ober- und / oder Unterseite.

Gemäß einer weiteren Ausführung kann die Federstrebe auch so ausgeführt sein, dass das mindestens eine Spiralfederelement längs so mit der Stützstrebe verbunden ist, dass die Stützstrebe innerhalb des Querschnitts des Spiralfederelements verläuft. Bevorzugt ist dabei das Spiralfederelement über die Innenseiten von deren Windungen mit der Mantelfläche der Stützstrebe verbunden, z.B. verklebt oder geklammert. Ist gemäß einer weiteren, vorteilhaften Ausführung die Stützstrebe z.B. stabförmig und weist darüber hinaus gegebenenfalls einen kreisförmigen Querschnitt auf, so kann in diesen Fällen das Spiralfederelemente der Federstrebe die Außenseiten der Stützstrebe umfassen, insbesondere jeweils eine Unter- und / oder Oberseite.

Gemäß weiteren, vorteilhaften Ausführungen kann eine Federstrebe auch mehrere Spiralfederelemente aufweisen. Diese können dann z.B. auf unterschiedlichen Seiten der Stützstrebe aufgelegt oder z.B. längs der Stützstrebe ineinander gewickelt sein. Beispiele für derartige Ausführungen werden noch näher erläutert werden.

Das Spiralfederelement der erfindungsgemäßen Federstrebe kann unterschiedliche Querschnittsformen aufweisen. So sind kreisförmige und ovale Querschnitte möglich. Besonders vorteilhaft sind z.B. annähernd wabenförmige, annähernd nierenförmige bzw. annähernd herzförmige Querschnitte. Die Damit verbundenen Vorteile werden nachfolgend an den in den Figuren dargestellten Beispielen noch näher erläutert werden.

Zur weiteren Stabilisierung kann zudem die Federstrebe einen Hüllschlauch aufweisen, welcher die Stützstrebe und das mindestens eine Spiralfederelement vorteilhaft über deren gesamte Länge komplett umfasst. Hiermit kann die Auswirkung von unerwünschten seitlich in das Spiralfederelement einwirkenden Scherkräften, also von nicht nur vertikal einwirkenden Druckkräften, reduziert werden.

Vorteilhaft besteht das Spiralfederelement der Federstrebe aus einem elastischen, z.B. mit Glasfasern faserverstärkten Kunststoffmaterial. Ist dieses zudem noch bandförmig, so kann dieses über die Außen- bzw. Innenseiten von deren Windungen besonders einfach mit der Mantelfläche der Stützstrebe verbunden werden, z.B. verklebt, geheftet oder geklammert werden.

Wie bereits ausgeführt, sind Federstreben gemäß der Erfindung besonders zum Aufbau von Matratzenträgern geeignet. Dabei sind die Federstreben im Inneren des Trägers annähernd parallel nebeneinander liegend angeordnet und erstrecken sich vorteilhaft über die gesamte Breite des Matratzenträgers. Weiterhin sind die Federstreben so ausgerichtet, dass die Spiralfederelemente nach oben gerichtet sind und somit eine federnde Auflagefläche für eine Matratze bilden. Falls jede Federstreben zwei oder mehr Spiralfederelemente aufweisen sollte, so können diese auch so ausrichtet sein, dass sich eine obere und eine untere federnde Auflagefläche ergeben. In einem solchen Fall ist der Matratzenträger wendbar, kann also wahlweise beidseitig mit einer Matratze belegt werden.

Falls der Matratzenträger einen bevorzugt umlaufenden Rahmen aufweist, so können die Stützstreben der Federstreben auch starr mit dem Rahmen verbunden sein. Diese erstrecken sich dann bevorzugt quer über die gesamte Breite im Inneren des Rahmens und sind fest mit diesem verbunden. Ein Matratzenträger dieser Art ist besonders verwindungssteif und besonders geeignet zur Auflage von weichen, nicht selbst formstabilen Matratzen, z.B. einfachen Vollschaummatratzen geringer Dicke.

Bei geeigneter Auslegung der Spiralfederelemente der eingesetzten Federstreben, insbesondere von deren Federhöhe und Härte, können Träger in der oben beschriebenen Ausführung u.U. auch direkt als Liegefläche eingesetzt werden. Es kann dann gegebenenfalls auf die Auflage einer separaten Matratze verzichtet werden. Die Auflageflächen, welche durch die Oberseiten der längs verlaufenden Spiralfederelemente gebildet werden, können dabei vorteilhaft mit einer zusätzlichen Matte abgedeckt werden. Weiterhin können die Stützstreben der erfindungsgemäßen Federstreben geradlinig gestreckt, oder auch konvex gekrümmt sein.

Andererseits es auch möglich, die erfindungsgemäße Federstrebe als ein Bauteil im Inneren von Posterelementen oder Matratzen einzusetzen.

Die Erfindung und vorteilhafte Ausführungsformen derselben werden an Hand der kurz angeführten Figuren nachfolgend näher erläutert. Dabei zeigt
- Fig. 1: einen Eckbereich eines ersten beispielhaften Matratzenträgers in Draufsicht aus erfindungsgemäßen Federstreben mit aufgelegten Spiralfederelementen,
- Fig. 2: einen weiteren, beispielhaften Matratzenträger in Draufsicht aus erfindungsgemäßen Federstreben mit untergelegten Spiralfederelementen,
- Fig. 3a: eine beispielhafte Federstrebe mit lattenförmiger Stützstrebe und einem aufgelegten Spiralfederelement mit annähernd wabenförmigen Querschnitt,
- Fig. 3b: die Federstrebe von Fig. 3a mit einem Hüllmantel,
- Fig. 4a: eine beispielhafte Federstrebe mit lattenförmiger Stützstrebe und einem untergelegten Spiralfederelement mit annähernd wabenförmigen Querschnitt,
- Fig. 4b: die Federstrebe von Fig. 4a mit einem Hüllmantel,
- Fig. 5: eine beispielhafte Federstrebe mit stabförmiger Stützstrebe und einem aufgelegten Spiralfederelement mit annähernd nierenförmigem Querschnitt,
- Fig. 6: eine beispielhafte Federstrebe mit stabförmiger Stützstrebe und einem untergelegten Spiralfederelement mit annähernd herzförmigem Querschnitt,
- Fig. 7a: eine beispielhafte Federstrebe mit lattenförmiger Stützstrebe und ober- und unterseitig aufgelegten Spiralfederelementen mit annähernd wabenförmigen Querschnitt,
- Fig. 7b: die Federstrebe von Fig. 7a mit einem Hüllmantel,
- Fig. 8: eine beispielhafte Federstrebe mit stabförmiger Stützstrebe und ober- und unterseitig aufgelegten Spiralfederelementen mit annähernd nierenförmigem Querschnitt,
- Fig. 9: eine beispielhafte Federstrebe mit stabförmiger Stützstrebe und ober- und unterseitig umgreifenden Spiralfederelementen mit annähernd herzförmigem Querschnitt,
- Fig. 10: im Schnitt den beispielhaften Matratzenträger von Fig. 1 aus Federstreben gemäß der Ausführung von Fig. 3a in unbelasteten und belasteten Zustand,
- Fig. 11: im Schnitt einen beispielhaften Matratzenträger von Fig. 2 aus Federstreben gemäß der Ausführung von Fig. 4a in unbelasteten und belasteten Zustand,
- Fig. 12: im Schnitt einen beispielhaften Matratzenträger aus Federstreben gemäß der Ausführung von Fig. 6a in unbelasteten und belasteten Zustand,
- Fig. 13: beispielhaft im Schnitt einen wendbaren Matratzenträger aus Federstreben gemäß der Ausführung von Fig. 7a, und
- Fig. 14: beispielhaft im Schnitt einen wendbaren Matratzenträger aus Federstreben gemäß der Ausführung von Fig. 9.

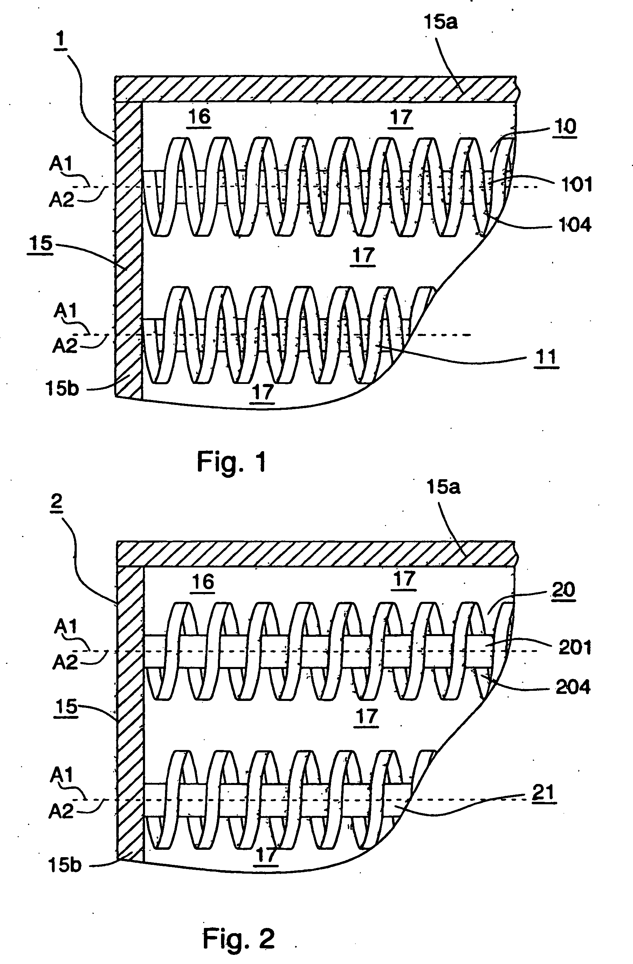

Figur 1 zeigt in einer Draufsicht einen Eckbereich eines ersten beispielhaften Matratzenträgers 1, der mit Federstreben 10, 11 gemäß der Erfindung ausgerüstet ist. Der Matratzenträger 1 weist einen Rahmen 15 aus längsseitigen und stirnseitigen Rahmenteilen auf. Der Eckbereich in Figur 1 zeigt ausschnittsweise ein stirnseitiges und längsseitiges Rahmenteil 15a, 15b des Rahmens 15. Diese begrenzen einen innen liegenden Aufnahmeraum 16 insbesondere zur Einlage einer Matratze. Zur Halterung einer solchen Matratze dienen Federstreben, welche in den Aufnahmeraum 16 eingezogen sind. Der Ausschnitt in Figur 1 zeigt beispielhaft zwei derartige Federstreben 10, 11, welche parallel nebeneinander liegend in den Aufnahmeraum begrenzen. Entsprechend ist der in Figur 1 nicht in gezeigten Bereich des gesamten Aufnahmeraumes des Matratzenträgers 1 in der gleichen Weise regelmäßig mit quer verlaufenden Federstreben ausgeführt. Deren Oberseiten bilden eine federnde Auflagefläche für eine Matratze. Der Matratzenträger 1 ist somit einseitig gefedert.

Im Beispiel der Figur 1 verlaufend die Federstreben 10, 11, ... über die gesamte Breite des Matratzenträgers und sind in denen gegenüber liegenden Rahmenteilen fest verankert. Vorteilhaft sind alle Federstreben identisch aufgebaut. Gemäß der Erfindung enthält die Federstrebe 10 eine Stützstrebe 101 und zumindest ein längs damit verbundenes Spiralfederelemente 104. Dabei weist das Spiralfederelement 104 beispielhaft einen kreisförmigen Querschnitt auf und ist längst auf eine Oberseite der Stützstrebe 101 aufgelegt. Die Federstreben 10, 11 und alle weiteren, den Aufnahmeraum 16 füllenden Federstreben sind vorteilhaft identisch aufgebaut. Wird durch Auflage einer Matratze und deren anschließendem Gebrauch durch eine darauf ruhende Person eine annähernd vertikal Druckkraft auf die Spiralfederelemente der Federstreben ausgeübt, so wird hierdurch eine entsprechende Einfederung der Spiralfederelemente hervorgerufen. Dabei tritt der besondere Vorteil auf, dass nur diejenigen Windungen der Spiralfederelemente eingefedert werden, auf die tatsächlich eine punktuelle Druckkraft von oben einwirkt. Diese Einfederungen pflanzen sich aber nicht auf benachbarte Windungen des längs liegenden Spiralfederelements fort. Die Windungen des Spiralfederelements sind somit voneinander entkoppelt, so dass durch ein Eindrücken von einzelnen Windungen keine Aufwölbung benachbarter Windungen des Spiralfederelements verursacht wird. Bei einer Einfederung und einer dadurch verursachten Verformung weichen die betroffenen Windungen in Federungsräume 17 zwischen den parallelen Federstreben aus.

Figur 2 zeigt einen mit Figur 1 vergleichbaren Ausschnitt eines weiteren beispielhaften Matratzenträgers 2. Dieser ist ebenfalls mit gemäß der Erfindung gestalteten Federstreben 20, 21 ... ausgerüstet. So weist die Federstrebe 20 ebenfalls eine Stützstrebe 201 und zumindest ein damit längst verbundenes Spiralfederelement 204 auf. Bei der im Beispiel der Figur 2 gezeigten Ausführung weist das Spiralfederelement 204 einen annähernd ovalen Querschnitt auf und ist beispielhaft längst unter die Stützstreben gelegt. Die Federstreben 20, 21 und alle weiteren, den Aufnahmeraum ausfüllenden Federstreben sind vorteilhaft entsprechend gestaltet und stellen auch hier eine federnde Auflagefläche für eine Matratze zur Verfügung. Auch in diesem Falle ist der Matratzenträger 2 einseitig gefedert.

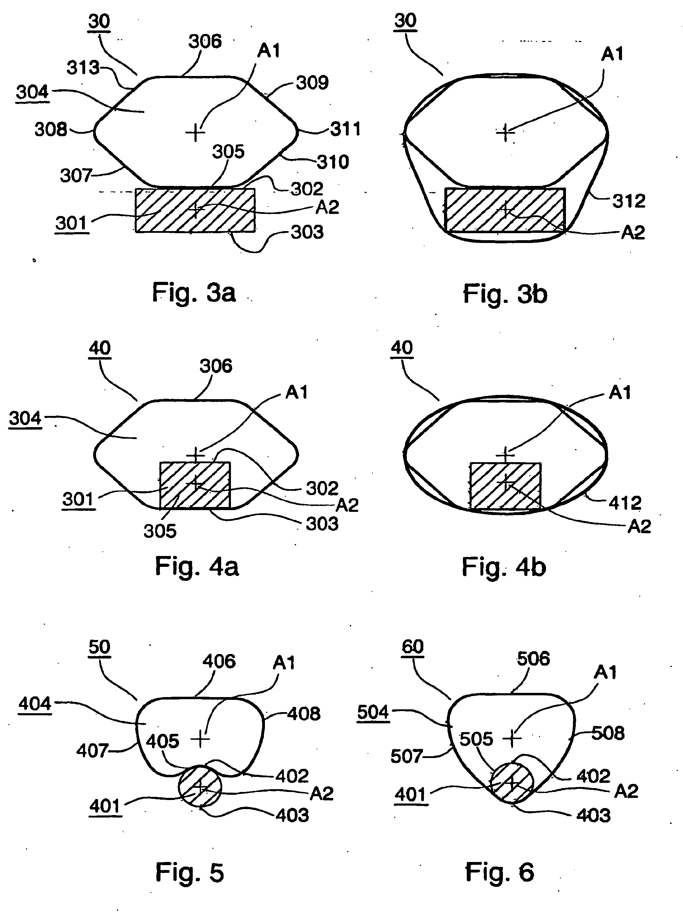

Mittels der Figuren 3a, 3b und 4a, 4b und 5, 6 und 7a, 7b und 8, 9 werden nachfolgend Ausführungsbeispiele von gemäß der Erfindung gestalteten Federstreben näher erläutert. Dabei zeigen die Beispiele in den Figuren 3a, 3b und 4a, 4b und 5, 6 Federstreben, welche jeweils ein Spiralfederelement aufweisen und somit einseitig belastbar sind.

So ist in Figur 3a eine Federstrebe 30 gezeigt. Deren Spiralfederelement 304 ist längs so mit einer Stützstrebe 301 verbunden, dass diese außerhalb des Querschnitts des Spiralfederelements verläuft. Vorteilhaft ist dabei die Stützstrebe 301 lattenförmig und weist eine Ober- und Unterseite 302, 303 auf. Das Spiralfederelement 304 ist längs auf die Oberseite 302 der Stützstrebe 301 aufgelegt und weist einen annähernd wabenförmigen Querschnitt auf. Jede Windung dieses Spiralfederelements verfügt über einen inneren und äußeren parallelen Auflageschenkel 305, 306 auf. Diese sind über ein erstes Paar an seitlichen Federschenkeln 306, 307, in Figur 3a links dargestellt, und über ein zweites Paar an seitlichen Federschenkeln 309, 310, in Figur 3a rechts dargestellt, miteinander verbunden. Die Übergänge zwischen den beiden Paaren an Federschenkeln stellen erste und zweite Torsionsbögen 308, 311 dar.

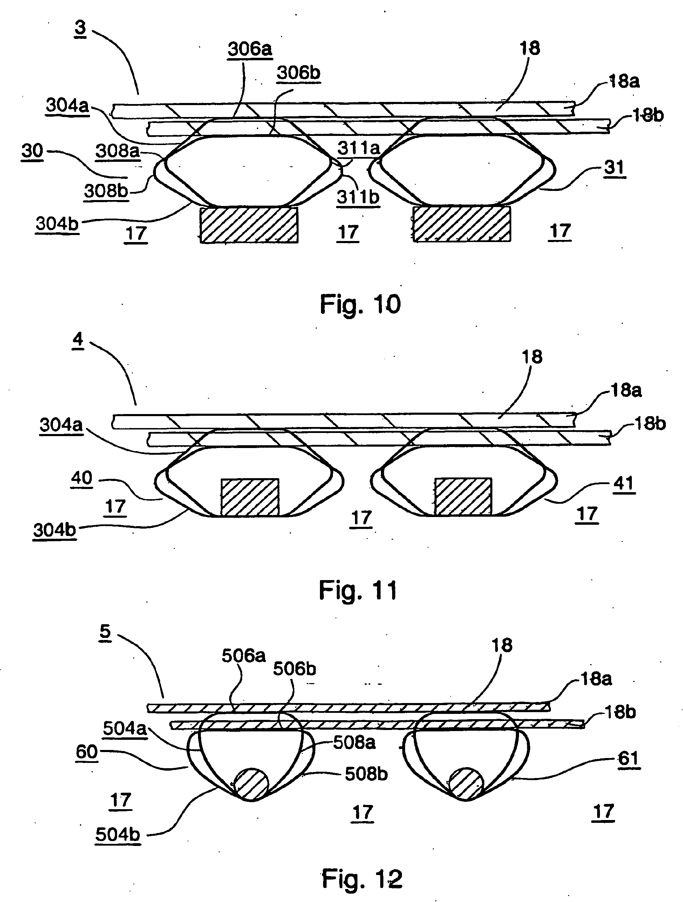

Das Spiralfederelement 304 ist über den inneren Auflageschenkel 305 mit der Oberseite 302 der rechteckförmigen Stützstrebe 301 verbunden, insbesondere damit verklebt oder verklammert. Der gegenüberliegende äußere parallele Auflageschenkel 306 kann die Auflagefläche z. B. für eine Matratze bilden. Über diesen werden Druckkräfte vertikal in die Federstrebe 30 eingeleitet. Bei der dadurch hervorgerufenen Verformung der betroffenen Windungen des Spiralfederelements wird dabei der parallele Auflageschenkel 306 gegen die Federkraft der Torsionsbögen 308, 311 in Richtung des inneren Auflageschenkels 305 verschoben. Dies wird am Beispiel der in Figur 10 dargestellten Matratze 3 noch näher erläutert werden.

Gemäß einer weiteren Ausführungsform kann eine Federstrebe zusätzlich von einem Hüllschlauch komplett eingefasst sein. So zeigt die Querschnittsdarstellung in Figur 3b die mit einem zusätzlichen Hüllschlauch 312 ausgerüstete Federstrebe 30. Dieser umfasst komplett die lattenförmige Stützstrebe 301 und das längs darauf liegende Spiralfederelement 304.

Die in Figur 4a im Querschnitt dargestellte Federstrebe 40 weist ebenfalls eine lattenförmige Stützstrebe 301 und ein Spiralfederelement 304 mit annähernd wabenförmigem Querschnitt auf. Bei dieser Ausführung ist das Spiralfederelement 304 allerdings längst so mit der Stützstrebe 301 verbunden, dass die Stützstrebe innerhalb des Querschnitts des Spiralfederelements verläuft. Bei der in Figur 4a im Querschnitt gezeigten beispielhaften Windung des Spiralfederelements 304 ist somit der innere Auflageschenkel 305 mit der Unterseite 303 der lattenförmigen Stützstrebe 301 verbunden. Die Windungen des Spiralfederelements umfassend somit die Außenseiten 303 der Stützstrebe 301. Diese kommt somit im Inneren der Windungen des Spiralfederelements zu liegen, so dass die Federstrebe 40 im Vergleich zur Federstreben 30 über eine geringere Bauhöhe verfügt. Wie in Figur 4b gezeigt, kann auch die Federstrebe 40 einen Hüllschlauch 412 aufweisen, welche längs das Spiralfederelement 404 mit allen Windungen und die quasi innerhalb der Windungen platzierte lattenförmige Stützstrebe 301 komplett umfasst.

Figur 5 zeigt in einer weiteren Ausführungsform eine Federstreben 50 im Querschnitt. Dieses verfügt über eine stabförmige Stützstrebe 401 mit beispielhaft kreisförmigem Querschnitt. Dabei ist in Figur 5 deren in vertikaler Richtung oben liegende Mantelbereich 402 und der gegenüber liegende untere Mantelbereich mit 403 kennzeichnet. Das Spiralfederelement 404 weist einen annähernd nierenförmigen Querschnitt auf. Eine Windung dieses Spiralfederelements verfügt somit über einen äußeren horizontalen Auflageschenkeln 406, in den eine z. B. von einer aufgelegten Matratze hervorgerufene Druckkraft eingeleitet wird. Über einen gegenüber liegenden Inneren sattelförmigen Auflagebereich 405 ist diese Wendung auf der Oberseite 402 der stabförmigen Stützstrebe 401 aufgelegt und dort verankert. Der Auflageschenkel 406 und der Auflagebereich 405 sind über seitliche Federschenkel 407, 408 zur kompletten Windung verbunden. Diese Federschenkel wirken auch als Torsionsbögen und sind bei Druckbelastung entsprechenden Verformungen ausgesetzt.

Figur 6 zeigt im Querschnitt eine weitere Ausführungsform für eine gemäß der Erfindung gestaltete Federstrebe 60. Diese weist ebenfalls eine stabförmige Stützstrebe 401 auf. Dagegen hat deren Spiralfederelement 504 einen annähernd herzförmigen Querschnitt. Bei der Federstrebe 60 sind die Stützstrebe und das Spiralfederelement längs so miteinander verbunden, dass die Stützstrebe 401 wiederum innerhalb des Querschnitts des Spiralfederelements 504 verläuft. Das Spiralfederelement ist somit quasi unter die Stützstrebe untergelegt. Eine Windung des Spiralfederelements 504 verfügt wiederum über einen äußeren Auflageschenkel 506, über den Druckkräfte von außen in das Spiralfederelement eingeleitet werden. Ein gegenüberliegender Auflagebereich 505 umfasst die stabförmige Stützstrebe 401 im Bereich von deren unterseitiger Mantelfläche 403 und ist dort fixiert. Der Auflageschenkel 506 und der Auflagebereich 505 werden wiederum beidseitig von seitlichen Federschenkeln 507, 508 zu einer kompletten Windung des Spiralfederelements verbunden. Beide Federschenkel wirken als Torsionsbögen und sind bei einer Druckbelastung entsprechenden Verformungen ausgesetzt.

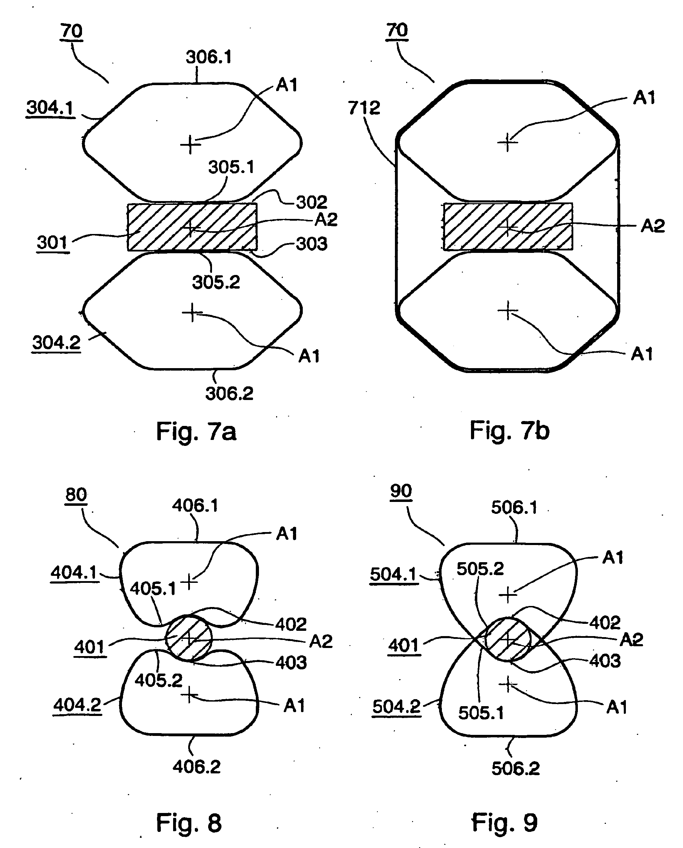

Anhand der Figuren 7a, 7b und 8, 9 werden nachfolgend weitere vorteilhafte Ausführungsformen von Federstreben erläutert, welche über mehr als ein Spiralfederelement verfügen.

So zeigt Figur 7a eine Federstrebe 70 mit einer lattenförmigen Stützstrebe 301, deren Ober- und Unterseiten 302, 303 jeweils längs mit einem Spiralfederelement 304.1, 304.2 belegt sind. Beispielhaft weisen diese Spiralfederelemente wiederum annähernd wabenförmige Querschnitte auf. So ist das obere Spiralfederelement 304.1 über dessen inneren Auflageschenkel 305.1 auf der Oberseite 302 der Stützstrebe 301 aufgelegt, und entsprechend das unteren Spiralfederelement 304.2 über dessen inneren Auflageschenkel 305.2 auf der untere Seiten 303 der Stützstrebe 301. Eine solche Federstrebe 70 hatte den Vorteil, dass wahlweise oder gleichzeitig Druckkräfte über den äußeren Auflageschenkel 306.1 des oberen Spiralfederelements 304.1 und / oder den äußeren Auflageschenkel 306.2 des unteren Spiralfederelements 306.2 eingeleitet werden können. Federstreben dieser Art können z. B. zum Aufbau von wendbaren Matratzenträgern verwendet werden, aber auch als ein beidseitig federndes Konstruktionselement im Inneren von Polstermöbel, Polsterelementen bzw. Matratzen. Wie in Figur 7b gezeigt, kann auch die Federstreben 70 mit einem Hüllschlauch 712 ausgerüstet sein. Dieser umfasst komplett das obere und untere Spiralfederelement und die zwischen liegende lattenförmige Stützstrebe 301.

Figur 8 zeigt als weitere Ausführungsform eine Federstrebe 80 mit einer stabförmigen Stützstreben 401. Deren Unter- und Oberseiten 403, 402 sind mit oberen, unteren Spiralfederelementen 404.1, 404.2 belegt, der Windungen annähernd nierenförmige Querschnitte aufweisen. So ruhen die gewellten inneren Bereiche 405.1, 405.2 der Windungen des oberen bzw. unteren Spiralfederelements 404.1, 404.2 auf den Bereiche 403, 402 der Mantelfläche der stabförmigen Stützstrebe 401. Über die äußeren Auflageschenkel 406.1, 406.2 der Spiralfederelemente 404.1, 404.2 können wiederum Druckkräfte von einer oder beiden Seiten in die Federstrebe 80 eingeleitet werden.

Figur 9 zeigt schließlich eine Federstrebe 90 mit wiederum einer stabförmigen Stützstrebe 401. Diese ist mit zwei gegenüberliegenden Spiralfederelementen 504.1, 504.2 mit annähernd herzförmigem Querschnitt belegt. So umfasst das obere Spiralfederelement 504.1 über dessen inneren Auflagebereich 505.1 die untere Mantelfläche 403 der Stützstrebe 401, und das untere Spiralfederelement 504.2 über dessen inneren Auflagebereich 505.2 die obere Mantelfläche 402. Im Beispiel der Figur 9 sind die Windungen der beiden Spiralfederelemente somit ineinander gewickelt und können wiederum beidseitig mit Druckkräften belastet werden. So können in die Federstrebe 90 sowohl von oben über den äußeren Auflageschenkel 506.1 des oberen Spiralfederelements 504.1 als auch von unteren über den äußeren Auflageschenkel 506.2 des unteren Spiralfederelements 504.2 Druckkräfte eingeleitet werden.

Über die Beispiele in den Figuren 7 bis 9 hinaus sind weitere, nicht dargestellte Ausführungen möglich, bei denen mehr als zwei Spiralfederelemente ineinander gewickelt sind. Deren Windungen stützen sich dann abwechselnd auf einer Stützstrebe ab oder umfassen diese.

Anhand der Figuren 10 bis 14 werden nachfolgend beispielhafte Ausführungen von Matratzenträgern beschrieben, welche aus erfindungsgemäßen Federstreben aufgebaut sind.

So zeigt Figur 10 einen Ausschnitt durch einen Matratzenträger 3, der Federstreben 30, 31 gemäß der Ausführung von Figur 3a aufweist. Dabei ist sowohl ein unbelasteter als auch ein belasteter Zustand des Matratzenträgers 3 gezeigt. So befindet sich das Spiralfederelement 304 der Federstrebe 30 zum einen im unbelasteten Zustand 304a. Dabei nimmt die obere Abdeckschicht 18 des Matratzenträgers 3, welche auf dem im nicht gespannten Zustand 306a befindlichen äußeren Auflageschenkel des Spiralfederelements ruht, eine erhöhte Position 18a ein. Eine Belastung des Matratzenträgers mit einer Druckkraft ist in Figur 10 durch eine abgesenkte Position 18b der oberen Abdeckschicht 18 symbolisiert. Entsprechend geht der äußere parallele Auflageschenkel in eine abgesenkte Position 306b über und es tritt der eingefederte, belastete Zustand 304b des Spiralfederelements auf. Die dadurch verursachte Verformung des Spiralfederelementes bewirkt eine Abflachung der seitlichen Federschenkel und ein seitliches Ausweichen der Torsionsbögen in die Federungsräume 17. Diese gehen dabei vom unbelasteten Zustand 308a, 311a in den belasteten Zustand 308b, 311b über. Die gleiche Verformung tritt im belasteten Zustand der daneben liegenden Federstrebe 31 und möglicherweise weiterer, nicht gezeigter Federstreben des Matratzenträgers 3 auf.

Die Figuren 11 und 12 zeigen die Matratzenträger 4 und 5 in entsprechender Weise jeweils in einem unbelasteten und einem belasteten Zustand. Dabei ist der Matratzenträger 4 im Beispiel der Figur 11 aus Federstreben 40, 41 aufgebaut, welche der im Beispiel der Figur 4 dargestellten Form entsprechen. Das Spiralfederelement der Federstrebe 30 ist wiederum im unbelasteten Zustand 304a und im belasteten Zustand 304b gezeigt.

Der in Figur 12 ausschnittsweise gezeigte Matratzenträger 5 ist aus Federstreben 60, 61 aufgebaut, welche die im Beispiel der Figur 6 bereits erläuterte Querschnittgeometrie aufweisen. Auch hierbei ist das Spiralfederelement der Federstrebe 60 in unbelasteten Zustand 504a, und im belasteten Zustand 504b gezeigt. So hält der äußere parallele Auflageschenkel in nicht gespanntem Zustand 506a die obere Abdeckschicht 18 des Matratzenträgers in der erhöhten, unbelasteten Position 18a. Wird der Matratzenträger 5 belastet, so senkt sich die Abdeckschicht 18 in die belastete Position 18b. Dabei wird z.B. der rechte seitliche Federschenkel vom unbelasteten Zustand 508a in den belasteten Zustand 508b verformt und dabei der parallele Auflageschenkel vom unbelasteten Zustand 506a in den belasteten Zustand 506b abgesenkt. Die daneben liegende Federstrebe 61 ist dabei den gleichen Verformungen ausgesetzt.

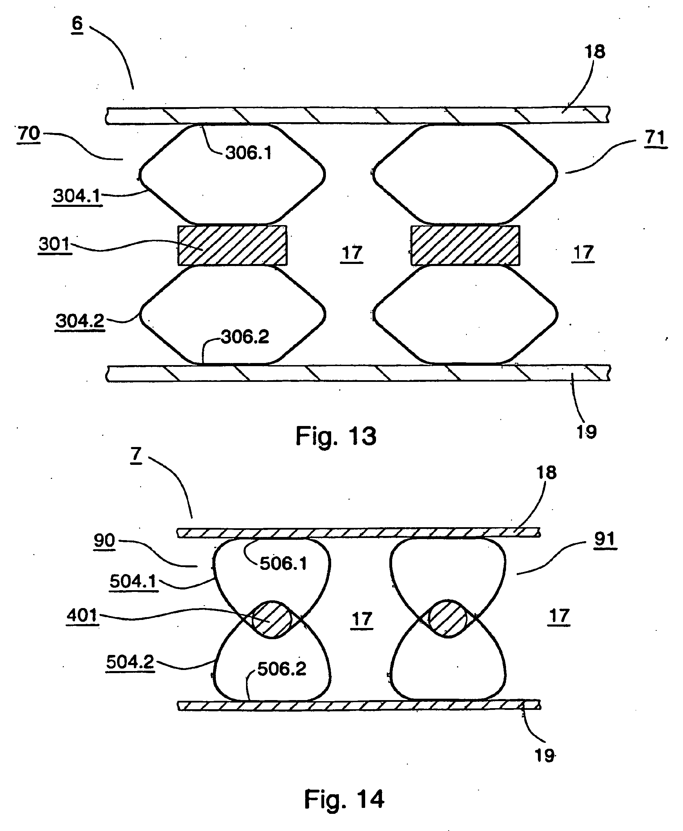

In den Figuren 13, 14 sind Beispiele von zweiseitig gefederten Matratzenträgern dargestellt. So zeigt Figur 13 beispielhaft einen Matratzenträger 6, welche aus Federstreben 70, 71 aufgebaut ist. Diese weisen eine Querschnittsgeometrie auf, welche oben bereits am Beispiel der Figur 7a erläutert wurde. Aufgrund der zweiseitigen Belegung der Stützstrebe 301 mit einem oberen und unteren Spiralfederelement 304.1, 304.2, können deren äußeren Auflageschenkel 306.1, 306.2 mit einer oberen und unteren Abdeckschicht 18, 19 belegt werden. Ein derartiger Matratzenträger ist beidseitig belastbar. So kann z. B. eine Matratze auf die obere Abdeckschicht 18 bzw. nach einer Umwendung des Matratzenträgers auf die dann oben befindliche Abdeckschicht 19 aufgelegt werden. Weiterhin kann ein der artiger beidseitig federnder Träger zum Beispiel auch im Inneren von Polstermöbeln, Polsterelementen und Matratzen eingesetzt werden.

Figur 14 zeigt schließlich einen Querschnitt durch einen Matratzenträger 7, der mit Federstreben 90, 91 ausgerüstet ist. Dieser weisen eine Querschnittgeometrie auf, welche der Ausführung von Figur 9 entspricht.

Bei der erfindungsgemäßen Federstrebe verläuft also prinzipiell das mindestens eine Spiralfederelement längs der dazugehörigen Stützstrebe. Auf Grund der Verbindung mit der Stützstrebe folgen somit die Windungen des Spiralfederelements dem Verlauf der Stützstrebe. Je nach Ausführung können dabei die Windungen des mindestens einen Spiralfederelements die Stützstrebe umfassen oder an dieser anliegen bzw. aufliegen. Die zentrale Längsachse eines Spiralfederelements verläuft also im Wesentlichen parallel zur Stützstrebe. Dies gilt auch, falls die Stützstrebe leicht gekrümmt sein sollte. In einem solchen Fall, der besonders beim Aufbau von Matratzen und Polsterelementen auftritt, verläuft die zentrale Längsachse des Spiralfederelements zumindest bereichsweise bzw. segmentweise parallel zur Stützstrebe. Der radiale Abstand zwischen der Längsachse A1 des Spiralfederelements und der Längsachse A2 der Stützstrebe bleibt folglich im unbelasteten Zustand der Federstrebe über deren gesamten Verlauf konstant.

Dieses grundlegende Gestaltungsprinzip ist bei jeder der in den Fig. 1 bis 14 dargestellten Ausführungsformen zu finden. So liegen in den Draufsichten der Fig. 1 und 2 die Längsachsen A1 und A2 übereinander. In den Schnittstellungen der Fig. 3 bis 9 liegen die Längsachsen A1 des oder der Spiralfederelemente 304, 404, 304.1 - 304.2 bzw. 404.1 - 404.2 und die Längsachse A2 der Stützstrebe 101, 201, 301 bzw. 401 jeweils annähernd auf einer gemeinsamen vertikalen Linie.

## Patentansprüche

1. Federstrebe (10,11; 20,21; 30,31; 40,41; 50; 60,61; 70,71; 80; 90,91) mit
a) einer Stützstrebe (101; 201; 301; 401) und
b) zumindest einem Spiralfederelement (104; 204; 304; 404; 504; 304.1, 304.2; 404.1, 404.2; 504.1, 504.2; ), welches längs mit der Stützstrebe derart verbunden ist, dass die Längsachse (A1) des mindestens einen Spiralfederelements und die längsachse (A2) der Stützstrebe zumindest bereichsweise parallel sind.

2. Federstrebe (10; 30; 50) nach Anspruch 1, wobei das mindestens eine Splralfederelement (304; 404) längs so mit der Stützstrebe (301; 401) verbunden ist, dass die Stützstrebe außerhalb des Querschnitts des Spiralfederelements verläuft. (Fg. 3a, 3b; Fig. 5; Fig. 10)

3. Federstrebe (70; 80) nach Anspruch 2, wobei Splralfederelemente (304.1, 304.2; 404.1, 404.2) auf Außenseiten der Stützstrebe (301; 401) aufliegen, insbesondere auf einer Ober- und / oder Unterseite (302, 303; 402, 403). (Fg. 7a, 7b; Fig. 8; Fig. 13)

4. Federstrebe (20; 40; 60) nach Anspruch 1, wobei das mindestens eine Spiralfederelement (304; 504) längs so mit der Stützstrebe (301; 401) verbunden ist, dass die Stützstrebe Innerhalb des Querschnitts des Spiralfederelements verläuft. (Fig. 4a, 4b; Fig. 6; Rg. 11; Fig. 12)

5. Federstrebe (90) nach Anspruch 4, wobei Spiralfederelemente (504.1, 504.2) Außenseiten der Stützstrebe (401) umfassen, insbesondere jeweils eine Unter- und / oder Oberseite (403, 402). (Fig. 9; Fig. 14)

6. Federstrebe (90) nach Anspruch 1, mit mehreren Spiralfederelementen (504.1, 504.2), welche längs der Stützstrebe (101; 201; 301; 401) ineinander gewickelt sind. (Fig. 9)

7. Federstrebe nach einem der vorangegangenen Ansprüche, wobei die Stützstrebe lattenförmig ist.

8. Federstrebe nach Anspruch 7, wobei die Stützstrebe (301) einen rechteckförmigen Querschnitt aufweist

9. Federstrebe nach einem der Ansprüche 1 bis 6, wobei die Stützstrebe stabförmig ist.

10. Federstrebe nach Anspruch 9, wobei die Stützstrebe (401) einen kreisförmigen Querschnitt aufweist.

11. Federstrebe nach einem der Ansprüche 1 bis 6, wobei das Spiralfederelement (104) einen kreisförmigen Querschnitt aufweist

12. Federstrebe nach einem der Ansprüche 1 bis 6, wobei das Spiralfederelement (204) einen ovalen Querschnitt aufweist.

13. Federstrebe nach einem der Ansprüche 1 bis 6, wobei das Spiralfederelement (304) einen annähernd wabenförmigen Querschnitt aufweist.

14. Federstrebe nach einem der Ansprüche 1 bis 6, wobei das Spiralfederelement (404) einen annähernd nierenförmigen Querschnitt aufweist.

15. Federstrebe nach einem der Ansprüche 1 bis 6, wobei das Spiralfederelement (504) einen annähernd herzförmigen Querschnitt aufweist.

16. Federstrebe nach einem der vorangegangenen Ansprüche, mit einem Hüllschlauch 312; 412; 712) um die Stützstrebe und das mindestens eine Spiralfederelement. (Fig. 3b, 4b, 7b)

17. Federstrebe nach einem der vorangegangenen Ansprüche, mit einem Spiralfederelement aus einem elastischen Kunststoffmaterial.

18. Federstrebe nach Anspruch 17, wobei das elastische Kunststoffmaterial faserverstärkt ist, insbesondere mit Glasfasern.

19. Federstrebe nach einem der vorangegangenen Ansprüche, wobei das Splralfederelement bandartig ist.

20. Matratzenträger (1 ... 7) mit Federstreben nach einem der Ansprüche 1 bis 19.

21. Matratzenträger nach Anspruch 20, wobei Federstreben im Inneren annähernd parallel nebeneinander liegend angeordnet sind.

22. Matratzenträger nach Anspruch 20 oder 21, der einen Rahmen (15;151,15b) aufweist, mit dem die Stützstreben der Federstreben starr verbunden sind.

23. Matratzenträger nach Anspruch 20, 21 oder 22, mit zumindest einer Matte (18; 19) zur Abdeckung der Federstreben.

24. Matratze mit Federstreben nach einem der Ansprüche 1 bis 19.

25. Polsterelement mit Federstreben nach einem der Ansprüche 1 bis 19.

## Claims

1. Spring strut (10, 11; 20, 21; 30, 31; 40, 41; 50; 60, 61; 70, 71; 80; 90, 91) with
a) a supporting strut (101; 201; 301; 401) and
b) at least one spiral spring element (104; 204; 304; 404; 504; 304.1, 304.2; 404.1, 404.2; 504.1, 504.2) which is connected longitudinally to the supporting strut in such a manner that the longitudinal axis (A1) of the at least one spiral spring element and the longitudinal axis (A2) of the supporting strut are parallel at least in regions.

2. Spring strut (10; 30; 50) according to Claim 1, wherein the at least one spiral spring element (304; 404) is connected longitudinally to the supporting strut (301; 401) in such a manner that the supporting strut runs outside the cross section of the spiral spring element (Figs 3a, 3b; Fig.5; Fig. 10).

3. Spring strut (70; 80) according to Claim 2, wherein the spiral spring elements (304.1, 304.2; 404.1, 404.2) rest on outer sides of the supporting strut (301; 401), in particular on an upper side and/or lower side (302, 303; 402, 403). (Figs 7a, 7b; Fig. 8; Fig. 13)

4. Spring strut (20; 40; 60) according to Claim 1, wherein the at least one spiral spring element (304; 504) is connected longitudinally to the supporting strut (301; 401) in such a manner that the supporting strut runs within the cross section of the spiral spring element. (Figs 4a, 4b; Fig. 6; Fig. 11; Fig. 12)

5. Spring strut (90) according to Claim 4, wherein spiral spring elements (504.1, 504.2) surround outer sides of the supporting strut (401), in particular a lower side and/or an upper side (403, 402) in each case. (Fig. 9; Fig. 14)

6. Spring strut (90) according to Claim 1, with a plurality of spiral spring elements (504.1, 504.2) which are coiled one inside another along the supporting strut (101; 201; 301; 401). (Fig. 9)

7. Spring strut according to one of the preceding claims, wherein the supporting strut is slat-shaped.

8. Spring strut according to Claim 7, wherein the supporting strut (301) has a rectangular cross section.

9. Spring strut according to one of Claims 1 to 6, wherein the supporting strut is rod-shaped.

10. Spring strut according to Claim 9, wherein the supporting strut (401) has a circular cross section.

11. Spring strut according to one of Claims 1 to 6, wherein the spiral spring element (104) has a circular cross section.

12. Spring strut according to one of Claims 1 to 6, wherein the spiral spring element (204) has an oval cross section.

13. Spring strut according to one of Claims 1 to 6, wherein the spiral spring element (304) has an approximately honeycombed cross section.

14. Spring strut according to one of Claims 1 to 6, wherein the spiral spring element (404) has an approximately kidney-shaped cross section.

15. Spring strut according to one of Claims 1 to 6, wherein the spiral spring element (504) has an approximately heart-shaped cross section.

16. Spring strut according to one of the preceding claims, with a casing tube (312; 412; 712) around the supporting strut and the at least one spiral spring element. (Fig. 3b, 4b, 7b)

17. Spring strut according to one of the preceding claims, with a spiral spring element made of an elastic plastics material.

18. Spring strut according to Claim 17, wherein the elastic plastics material is fibre-reinforced, in particular with glass fibres.

19. Spring strut according to one of the preceding claims, wherein the spiral spring element is in the manner of a band.

20. Mattress support (1 ... 7) with spring struts according to one of Claims 1 to 19.

21. Mattress support according to Claim 20, wherein the spring struts are arranged lying approximately parallel to one another in the interior.

22. Mattress support according to Claim 20 or 21, which has a frame (15; 15a, 15b) to which the supporting struts of the spring struts are rigidly connected.

23. Mattress support according to Claim 20, 21 or 22, with at least one mat (18; 19) for covering the spring struts.

24. Mattress with spring struts according to one of Claims 1 to 19.

25. Cushion element with spring struts according to one of Claims 1 to 19.

## Revendications

1. Montant à ressort (10, 11 ; 20, 21 ; 30, 31 ; 40, 41 ; 50 ; 60, 61 ; 70, 71 ; 80 ; 90, 91) comprenant
a) un montant de support (101 ; 201 ; 301 ; 401) et
b) au moins un élément de ressort spiral (104 ; 204 ; 304 ; 404 ; 504 ; 304.1, 304.2 ; 404.1, 404.2 ; 504.1, 504.2) qui est relié longitudinalement au montant de support de telle sorte que l'axe longitudinal (A1) de l'au moins un élément de ressort spiral et l'axe longitudinal (A2) du montant de support soient parallèles au moins dans certaines zones.

2. Montant à ressort (10 ; 30 ; 50) selon la revendication 1, dans lequel l'au moins un élément de ressort spiral (304 ; 404) est relié longitudinalement au montant de support (301 ; 401) de telle sorte que le montant de support s'étende à l'extérieur de la section transversale de l'élément de ressort spiral. (Fig. 3a, 3b ; Fig. 5 ; Fig. 10).

3. Montant à ressort (70 ; 80) selon la revendication 2, dans lequel des éléments de ressort spiral (304.1, 304.2 ; 404.1, 404.2) reposent sur des côtés extérieurs du montant de support (301 ; 401), en particulier sur un côté supérieur et/ou inférieur (302, 303 ; 402, 403). (Fig. 7a, 7b ; Fig. 8 ; Fig. 13).

4. Montant à ressort (20 ; 40 ; 60) selon la revendication 1, dans lequel l'au moins un élément de ressort spiral (304 ; 504) est relié longitudinalement au montant de support (301 ; 401) de telle sorte que le montant de support s'étende à l'intérieur de la section transversale de l'élément de ressort spiral. (Fig. 4a, 4b ; Fig. 6 ; Fig. 11 ; Fig. 12).

5. Montant à ressort (90) selon la revendication 4, dans lequel des éléments de ressort spiral (504.1, 504.2) entourent les côtés extérieurs du montant de support (401), en particulier un côté inférieur et/ou supérieur (403, 402) respectif. (Fig. 9 ; Fig. 14).

6. Montant à ressort (90) selon la revendication 1, comprenant plusieurs éléments de ressort spiral (504.1, 504.2) qui sont enroulés les uns dans les autres le long du montant de support (101 ; 201 ; 301 ; 401). (Fig. 9).

7. Montant à ressort selon l'une quelconque des revendications précédentes, dans lequel le montant de support est en forme de latte.

8. Montant à ressort selon la revendication 7, dans lequel le montant de support (301) présente une section transversale rectangulaire.

9. Montant à ressort selon l'une quelconque des revendications 1 à 6, dans lequel le montant de support est en forme de barre.

10. Montant à ressort selon la revendication 9, dans lequel le montant de support (401) présente une section transversale circulaire.

11. Montant à ressort selon l'une quelconque des revendications 1 à 6, dans lequel l'élément de ressort spiral (104) présente une section transversale circulaire.

12. Montant à ressort selon l'une quelconque des revendications 1 à 6, dans lequel l'élément de ressort spiral (204) présente une section transversale ovale.

13. Montant à ressort selon l'une quelconque des revendications 1 à 6, dans lequel l'élément de ressort spiral (304) présente une section transversale approximativement en forme de nid d'abeilles.

14. Montant à ressort selon l'une quelconque des revendications 1 à 6, dans lequel l'élément de ressort spiral (404) présente une section transversale approximativement en forme de haricot.

15. Montant à ressort selon l'une quelconque des revendications 1 à 6, dans lequel l'élément de ressort spiral (504) présente une section transversale approximativement en forme de coeur.

16. Montant à ressort selon l'une quelconque des revendications précédentes, comprenant un tuyau enveloppant (312 ; 412 ; 712) autour du montant de support et de l'au moins un élément de ressort spiral. (Fig. 3b, 4b, 7b).

17. Montant à ressort selon l'une quelconque des revendications précédentes, comprenant un élément de ressort spiral en une matière plastique élastique.

18. Montant à ressort selon la revendication 17, dans lequel la matière plastique élastique est renforcée par des fibres, en particulier par des fibres de verre.

19. Montant à ressort selon l'une quelconque des revendications précédentes, dans lequel l'élément de ressort spiral est en forme de bande.

20. Support de matelas (1 ... 7) comprenant des montants à ressort selon l'une quelconque des revendications 1 à 19.

21. Support de matelas selon la revendication 20, dans lequel les montants à ressort sont juxtaposés de manière approximativement parallèle à l'intérieur.

22. Support de matelas selon la revendication 20 ou 21, comprenant un cadre (15 ; 15a, 15b) auquel sont reliés rigidement les montants de support des montants à ressort.

23. Support de matelas selon la revendication 20, 21 ou 22, comprenant au moins une natte (18 ; 19) pour recouvrir les montants à ressort.

24. Matelas comprenant des montants à ressort selon l'une quelconque des revendications 1 à 19.

25. Élément de rembourrage comprenant des montants à ressort selon l'une quelconque des revendications 1 à 19.
